# EUROPEAN PATENT SPECIFICATION

(11) **EP 2 423 559 B1**
(45) Date of publication and mention of the grant of the patent: **09.08.2017**
(21) Application number: 11171680.9
(22) Date of filing: 28.06.2011
(51) Int. Cl.: F16L 55/165

(54) **Method and device for leading in an underground micro-tunnel pipes**
Verfahren und Vorrichtung zum Führen von Rohren in einem unterirdischen Mikrotunnel
Procédé et dispositif de zone d'entrée de conduites de micro-tunnels souterrains

(30) Priority: 24.08.2010 IT PR20100069
(43) Date of publication of application: 29.02.2012
(73) Proprietor: Guazzi S.N.C. Di Guazzi Roberto, Giuliano e Stefano Guazzi, 43043 Borgo Val Di Taro (PR) (IT)
(72) Inventor: GUAZZI, GIULIANO, 43043 BORGO VAL DI TARO (PARMA) (IT)
(74) Representative: Benelli, Cristian

(56) References cited:
- EP-A2- 1 106 885
- WO-A1-01/88338
- US-A1- 2004 184 886

## Description

### FIELD OF THE INVENTION

The present invention refers to the field of laying new pipes into underground micro-tunnels for transporting liquids or gas (for example the pipes of methane pipelines).

The micro-tunneling is a "NO-DIG" technology (a registered trademark). The technologies no-dig (which means it is not necessary to dig) or known as trenchless enable to lay underground pipes and cables or the partial or total operative recovery, or the substitution of existing underground ducts without using opencast diggings, in this way surface damages (roads, railways, airports, woods, rivers and channels, areas having a high environment value, historical squares, etcetera) are avoided, so that it is possible to avoid negative influences both on the natural and built environments, on surface structures and transport infrastructures.

Said technology is adapted to lay ducts and pipes, in that it enables to cross roads, railways, rivers, areas subjected to an environmental conservation, etcetera.

### STATE OF THE ART

Once has been terminated the micro-tunnel, one or more ducts, generally made of welded steel, for transporting liquids or gas, are led in.

It is possible to use different methods in order to avoid a direct contact between the tunnel and the pipes to be led in.

A first method comprises the step of fixing spacing collars made of plastics or polyurethane mortar between the pipe and the tunnel. This enables to avoid a sliding contact between the pipe and the bottom of the tunnel in which the pipe is inserted.

A disadvantage of said method consists in the following, it is not possible to use it in tunnels having a substantial length. However, such approach cannot be used for tunnels of substantial length because the friction between the ducts and the tunnel causes a substantial wear of the spacers.

For this reason, in tunnels of substantial length, it is provided a further system which fixes to the duct to be led in, a set of slides usually made of steel provided with anti-friction runners, by having a constant spacing.

The slides cannot be positioned at the locations where the coating of the pipe portions have been repaired (weld joints and points repaired beforehand).

The shells forming the slides are clamped by a dynamometric wrench and a layer of elastomeric material will be inserted between the shells and the duct.

In order to further reduce the friction between the slides and the tunnel, the bottom of the latter is usually covered by biodegradable lubricants to be intermittently or continuously spread for the entire length, on the bottom of the micro-tunnel for facilitating the sliding of the anti-friction runners.

Therefore, usually, the slides are provided with runners made of PTFE or wear sheet HARDOX (a registered trademark).

Normally, before inserting the duct in the tunnel, sub-ducts are inserted in the tunnel for the services. Such ducts (having sizes smaller than the fluid conveying main duct) are usually dragged inside the tunnel and then they are raised and fixed to the vault by different kinds of raising devices.

Other examples of prior art are the documents WO01/88338 (corresponding to the preamble of claim 1) and US2004/0184886.

WO01/88338 reveals a method of, and apparatus for, lining the interior surface of a passageway such as a pipeline, involving progressive installation of a liner on the interior surface of the passageway or on a substrate applied to the interior surface of the passageway by adhesively bonding the liner in position.

The liner is bonded to the inner surface of the passageway, or onto a substrate applied to the inner surface of the passageway, using a substance which hardens and which together with the liner forms a rigid structure. The apparatus includes a body adapted to be moved along the passageway to progressively install the liner. The body also applies the adhesive for the bonding process.

US2004/184886 discloses a method of selectively repairing the lining of a lined pipeline, said method comprising utilization of a conveyance adapted to be receivable within the pipeline, said conveyance being adapted to be able to travel through the pipeline.

Both aforesaid documents does not stop the pipe with an upper half-saddle connected to the lower half-saddle by a flanged joint. Moreover both aforesaid documents does not disclose a method for leading in an underground micro-tunnel pipes, in which the step of advancing and/or retracting the pipe to be inserted by rolling said means located between said pipe and said tunnel, and in which the rolling means are integral with a lower half-saddle for supporting and carrying a pipe.

### DISCLOSURE AND ADVANTAGES OF THE INVENTION

The object of the present invention consists of providing an advantageous method and a new device for leading in underground micro-tunnel ducts.

In fact, the method comprises the step of applying a roller system to the device supporting the pipes to be inserted, that is components enabling the rolling and therefore the advancing of the pipe itself.

The rolling components are located beneath the support, generally a semi-shell, supporting the pipe.

In this way, it is substantially reduced the coefficient of friction (because it is transformed from a sliding friction to a rolling friction) and consequently the stresses for pulling the duct inside the tunnel are reduced.

Moreover, the device provides the use of two semi-shells, adapted to clamp the pipe: eventually it is provided the optional possibility of shaping the upper shell in order to enable to fix also the sub-pipes, in this way a single approach enables the arranging/insertion of the main duct and of the sub-pipes.

The advantages of the proposed approach consist in a substantial reduction of the pulling stresses and in the fact it is no more necessary personnel entering the tunnel for fixing the small sub-pipes or for lubricating the bottom of the tunnel (with the consequent obvious problems of lighting, air change, etc.).

Such approach can be used for arranging ducts of every kind, by obviously modifying the slide for adapting it to the diameter and the weight of the duct to be arranged, to the diameter of the tunnel in which it is received.

The roller system can also be used with the existing devices which are provided with runners.

Said objects and advantages are all met by the slide for micro-tunnels, object of the present invention, which is characterized by what is provided in the attached claims.

### BRIEF DESCRIPTION OF THE DRAWINGS

This and other characteristics will be better understood by the following description of some embodiments shown as an exemplifying non-limiting way in the attached drawings.
- Figure 1 shows a front and side views of a tunnel receiving the device of the invention;
- Figure 2 illustrates a front cross-section view of the tunnel and device;
- Figure 3 illustrates a detail of the device, particularly its rolling means;
- Figure 4 illustrates a front view of the device inserted inside a tunnel in which a pipe will be positioned;
- Figure 5 illustrates a perspective view of the device;
- Figure 6 illustrates a side view of a detail of the above mentioned device.

### DESCRIPTION OF THE INVENTION

Referring to the above mentioned figures, 10 indicates a micro-tunnel receiving a device, generally indicated by 1, adapted to enable and facilitate the insertion of ducts, for conveying liquids or gas, in said underground micro-tunnels.

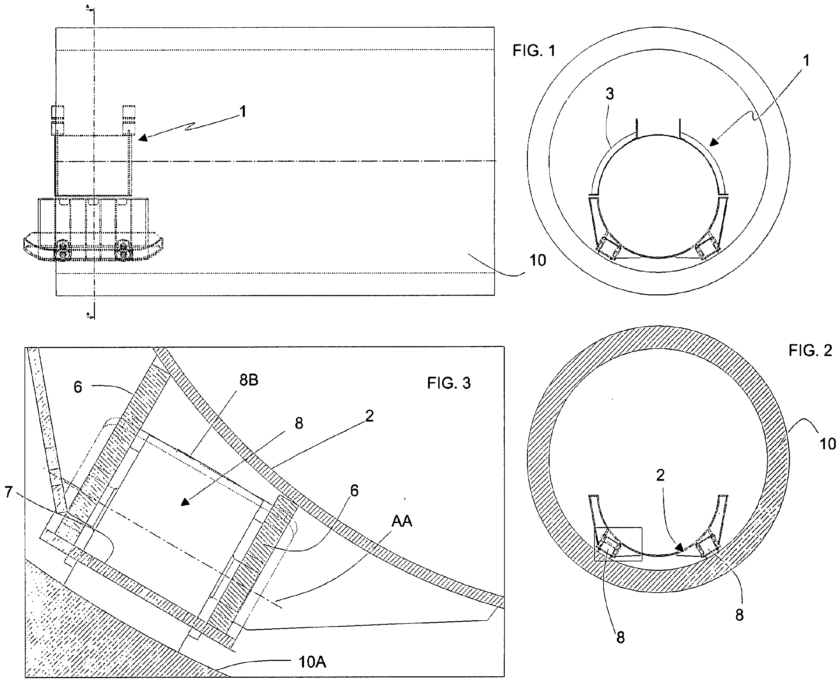

The device 1, once is inserted as shown in Figure 1, can longitudinally move forward or backward in the micro-tunnel.

The device 1 avoids the sliding of the known systems, by providing a set of rolling means (8), of rollers, so that it enables the device to slide inside the tunnel 10.

The device 1 moves longitudinally forward or backward in the micro-tunnel by dragging the pipe to be inserted, the latter being surrounded between two semi-saddles or semi-shells, indicated by references 2 and 3, which are located upward and downward respectively which, once they are coupled, form a cavity 4 for housing the pipe to be handled inside the tunnel.

The semi-shells 2 and 3, once they are coupled, have a diameter corresponding to the one of the pipe to be clamped and moved inside the micro-tunnel.

Further, the semi-shells 2 and 3, once they are coupled, have a shape corresponding to the one of the pipe to be clamped and moved inside the micro-tunnel.

Preferably, the shape is semi-circular, so that it can receive a circular cross-section pipe.

The rolling means 8 are integral with the lower semi-shell 2.

The rolling means 8 consist of rollers inserted in corresponding holes for receiving the axes AA of said rollers 8; said holes are drilled in side sectors 6 coupled to the semi-shell 2, in its lower portion. The side sectors can be downwardly closed in order to define a runner 7. Obviously, said runner 7 is perforated at the rollers 8 by enabling them to exit in the lower part.

The rolling means 8 are symmetrically positioned with respect to the median axis of the front cross-section of the semi-shell itself.

Moreover, means 8 are arranged, with respect to said median axis, with a set angle in order to stabilize the semi-shell and also the device 1.

In an embodiment, the rollers 8 are cylindrical.

In a further embodiment, the rollers 8 have an outer convex layer 8B, having a curvature corresponding to the one of the pipe 10, indicated by reference 10B.

As shown in the figure, the upper semi-saddle 3 is connected to the lower semi-saddle 2 by a side joint 9.

Eventually, the rollers 8 and runners 7 are further supported by a further side support, indicated by 5, extending from beneath the side joint 14 to the side sector 6.

During the operation, the pipe to be arranged is laid on the lower semi-saddle 2 and then it is closed by the upper semi-shell 3; by modifying the spacing between the runners 7, the number of rollers 8, the diameter of the semi-saddles 2 and 3, it is possible to use said device 1 for different kinds of pipes, adapting it to the diameter and weight of the pipe to be arranged and to the diameter of the tunnel receiving it.

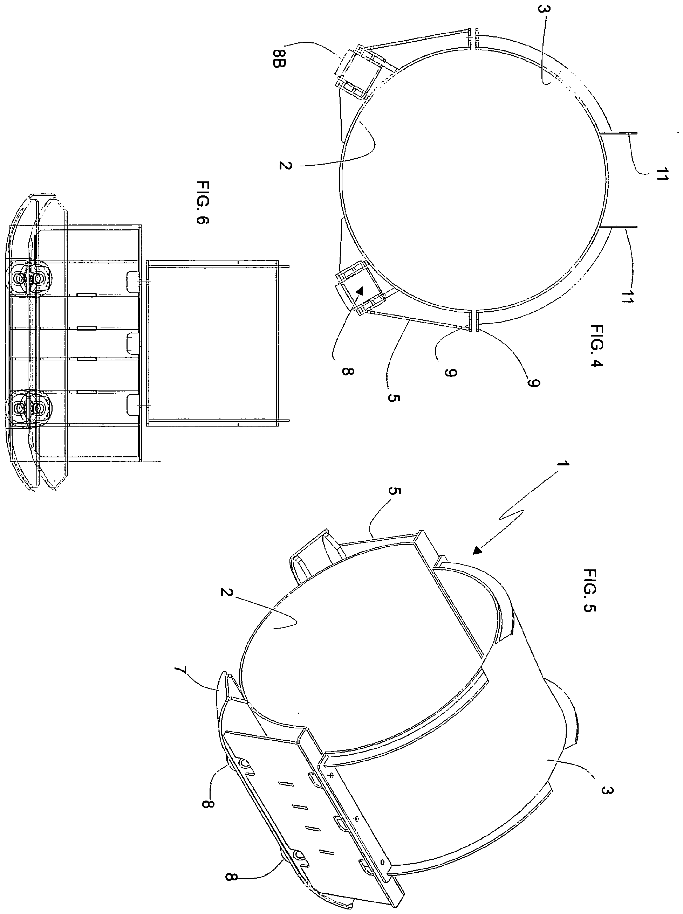

Particularly, with reference to Figure 4, it is observed that two brackets 11 bent and spaced one from the other, that extend from the upper semi-saddle 3, are used for supporting the sub-pipes.

In conclusion, the method for inserting ducts in underground micro-tunnels 10 comprises moving forward and/or backward the pipe to be inserted by a rolling operation of the rolling means 8, located between said pipe and said tunnel 10.

Said rolling operation is obtained by rolling means 8 integral to a lower semi-saddle supporting the pipe.

## Claims

1. Device (1) for leading in an underground micro-tunnel (10) pipes, comprising:
a. a lower half-saddle (2) having a diameter for containing a pipe to be handled;
b. a plurality of rolling means (8) integral with said lower half-saddle, whereby
said means (8) are symmetrically positioned under the half-saddle (2) and are located, with respect to said center line, with an angle in order to keep stable the half-saddle (2) during its advancement motion inside said micro-tunnel (10), whereby said lower half-saddle (2) stops the pipe with an upper half-saddle (3); **characterized by** the fact that the upper half-saddle (3) is connected to the lower half-saddle (2) by a flanged joint (9).

2. Device (1) for leading in an underground micro-tunnel (10) pipes, according to claim 1, **characterized by** the fact that on the upper outer surface of the upper half-saddle (3) there are folded brackets (13) for abutting sub-pipes.

3. Device (1) for leading in an underground micro-tunnel (10) pipes, according to claim 1, **characterized by** the fact that said means (8) are cylindrical rollers.

4. Device (1) for leading in an underground micro-tunnel (10) pipes, according to claim 1, **characterized by** the fact that said means (8) are convex rollers.

5. Method for leading in an underground micro-tunnel (10) pipes using the device according to claim 1, comprising the step of advancing and/or retracting the pipe to be inserted by rolling said means (8) located between said pipe and said tunnel (10), said means (8) being integral with a lower half-saddle for supporting and carrying a pipe.

## Patentansprüche

1. Vorrichtung (1) für die Führung in unterirdischen Mikro-Tunnel-Rohren (10), umfassend:
a. einen unteren halben Sattel (2) mit einem Durchmesser zur Aufnahme eines zu bearbeitenden Rohres;
b. eine Vielzahl von mit dem besagten halben Sattel integrierten Rollelementen (8), wobei
die besagten Mittel (8) symmetrisch unter dem halben Sattel (2) positioniert und angeordnet sind, in Bezug auf die besagte Mittellinie, mit einem Winkel, um stabil den halben Sattel (2) während seiner Vorwärtsbewegung innerhalb dem besagten Mikro-Tunnel (10) zu halten, wodurch der besagte untere halbe Sattel (2) das Rohr mit einem oberen halben Sattel (3) hält; **dadurch gekennzeichnet, dass** der obere halbe Sattel (3) mit dem unteren halben Sattel (2) durch eine Flanschverbindung (9) verbunden ist.

2. Vorrichtung für die Führung in unterirdischen Mikro-Tunnel-Rohren (10) nach Anspruch 1, **dadurch gekennzeichnet, dass** auf der oberen Außenfläche des oberen halben Sattel (3) Faltklammern (13) vorhanden sind, um mit unterirdischen Rohren in Berührung zu sein.

3. Vorrichtung für die Führung in unterirdischen Mikro-Tunnel-Rohren (10) nach Anspruch 1, **dadurch gekennzeichnet, dass** die besagten Mittel (8) Zylinderrollen sind.

4. Vorrichtung für die Führung in unterirdischen Mikro-Tunnel-Rohren (10) nach Anspruch 1, **dadurch gekennzeichnet, dass** die besagten Mittel (8) konvexe Rollen sind.

5. Verfahren für die Führung in unterirdischen Mikro-Tunnel-Rohren (10) mittels der Vorrichtung nach Anspruch 1, umfassend die Schritte von Vorwärtsschieben und/oder Zurückziehen des zu einführenden Rohres, wobei die besagten zwischen dem besagten Rohr und dem besagten Tunnel (10) vorhandenen Mittel (8) gerollt werden, wobei die besagten Mittel (8) mit einem unteren halben Sattel integriert sind, um ein Rohr zu unterstützen und tragen.

## Revendications

1. Dispositif (1) pour guider dans un tube souterrain à micro-tunnel, comprenant
a. une demi-selle inférieure (2) ayant un diamètre pour contenir un tube à traiter ;
b. une pluralité de moyens de roulement (8) intégrés avec ladite demi-selle inférieure, pour lequel
lesdits moyens (8) sont positionnés symétriquement au dessous de la demi-celle (2) et sont situés, par rapport à ladite ligne centrale, avec un angle afin de maintenir stable la demi-selle (2) lors de son mouvement d'avancement à l'intérieur dudit micro-tunnel (10), de sorte que ladite demi-selle (2) inférieure arrête le tube avec une demi-selle supérieure (3), **caractérisé en ce que** la demi-selle supérieure (3) est reliée à la demi-selle inférieure (2) par un joint à bride (9).

2. Dispositif pour guider dans un tube souterrain à micro-tunnel (10) selon la revendication 1, **caractérisé en ce que** sur la face extérieure supérieure de la demi-selle supérieure (3) il y a des étriers pliés (13) pour contacter des tubes souterrains.

3. Dispositif pour guider dans un tube souterrain à micro-tunnel (10) selon la revendication 1, **caractérisé en ce que** lesdits moyens (8) sont des rouleaux cylindriques.

4. Procédé pour guider dans un tube souterrain à micro-tunnel (10) selon la revendication 1, **caractérisé en ce que** lesdits moyens (8) sont des rouleaux convexes.

5. Procédé pour guider dans un tube souterrain à micro-tunnel (10) en utilisant le dispositif selon la revendication 1, comprenant l'étape consistant à avancer et/ou rétracter le tube à insérer en faisant rouler lesdits moyens (8) situés entre ledit tube et ledit tunnel (10), lesdits moyens (8) étant solidaires avec une demi-selle inférieure pour supporter et porter un tube.
